Europäisches Patentamt

European Patent Office

Office européen des brevets

(19)

(11) **EP 1 267 567 A1**

(12) **EUROPEAN PATENT APPLICATION**

(43) Date of publication:
18.12.2002 Bulletin 2002/51

(51) Int Cl.7: **H04N 3/15**

(21) Application number: 01810576.7

(22) Date of filing: 14.06.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **CSEM Centre Suisse d'Electronique et de Microtechnique**
**2007 Neuchâtel (CH)**

(72) Inventor: **Lauxtermann, Stefan**
**8965 Berikon (CH)**

(74) Representative:
**Patentanwälte Feldmann & Partner AG**
**Kanalstrasse 17**
**8152 Glattbrugg (CH)**

(54) **High speed optoelectronic active-pixel sensor and method for detecting electromagnetic radiation**

(57)    The optoelectronic active-pixel sensor is based on a time-interleaved readout scheme that allows precharging of time-critical signals. It comprises at least two pixels arranged in an array (4). Each pixel has a photodetector for generating an electric output signal as a function of incident electromagnetic radiation and an output line for the output signal, and each pixel is individually addressable with a pixel address. The sensor further comprises means (5) for addressing individual pixels and means for reading out output signals of individual pixels. The addressing means (5) are designed such that pixel output lines of a first set (40.1) of pixels are charged while simultaneously pixel output lines of a second, different set (40.2) of pixels are read out. The invention is suited for high-speed sensor implementation as well as for reducing peak power consumption and relax circuitry requirements for any APS sensor integrated circuit.

Fig. 3

EP 1 267 567 A1

**Description**

Field of the invention

The invention relates to an optoelectronic active-pixel sensor (APS) and to a method for detecting electromagnetic radiation using such a sensor, according to the preambles of the independent claims. The sensor and the method are based on a time-interleaved readout scheme that allows pre-charging of time critical signals.

Even though the description focuses on a high-speed sensor implementation, the invention is likewise suited to reduce peak power consumption and relax circuitry requirements for any APS sensor integrated circuit (IC).

Background of the invention

Most of today's electronic cameras are realized using a charge-coupled device (CDD) or complementary metal oxide semiconductor (CMOS) type semiconductor sensor. While CCDs are still used in most applications, in some applications, however, they are currently replaced by CMOS photo sensors where high functionality, low power consumption and low overall system costs are stringent design constraints. Another very promising application field for CMOS photo sensors is electronic high-speed imaging. While CCDs are basically read out serially due to their inherent operation principle, the highly parallel nature of image acquisition can be easier reflected in the design architecture of a CMOS imager. Therefore CMOS high-speed imagers with high frame rates can be realized by adapting the design architecture to this requirement without having to increase the data rate of individual output channels to technology-limited values, i.e., integrating very complex designs with high power consumption.

For two-dimensional CCDs the maximum output rate is usually limited by the horizontal column register. A method of reading out several areas of the sensor in parallel by transporting charge to output ports located at opposite sides of the sensor has been realized. For this type of sensor it is, however, difficult and in some cases even impossible to correct the non-uniformity between these areas. In any case the maximum number of output ports is limited to rather small values.

For CMOS active-pixel sensors (APS), the maximum readout speed is usually limited by the finite slew rates supported by the various analog amplification stages. Due to the operation principle of an APS, compared to CCDs, the imager designer has considerable more freedom to modify the architecture and reduce slew rate requirements.

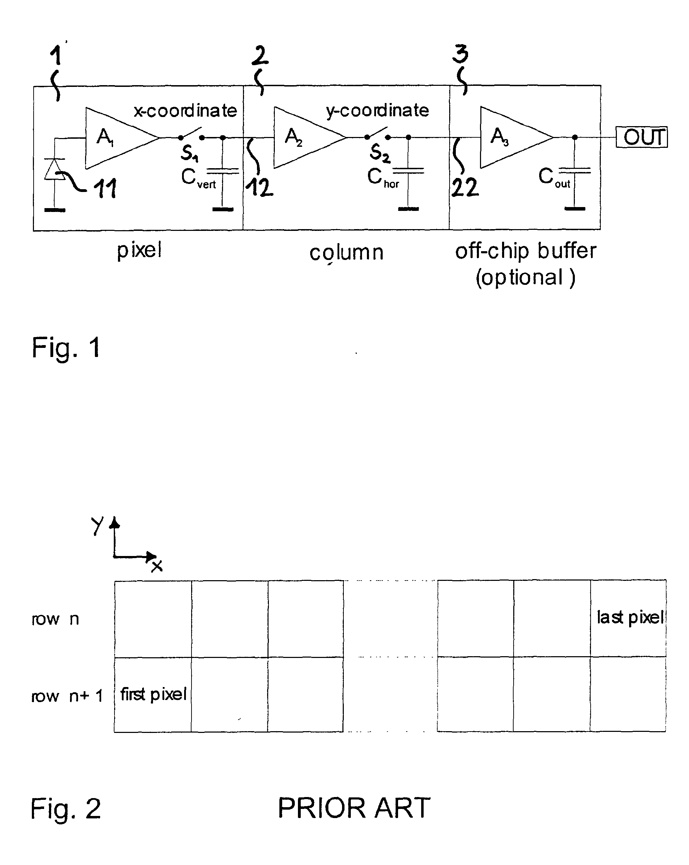

The classical APS is based on a two-stage amplification scheme where each stage can be switched on and off by an appropriate address logic, as shown in **Figure 1**. A first stage 1 is used for in-pixel amplification (preamplifier) of an electric output signal generated by a photodiode 11 as a function of incident light (not shown), by means of a first amplifier $A_1$. In a two-dimensional array, a first switch $S_1$ arranged in the first stage 1 is used for row selection (x coordinate). The electric output signal is outputted on a vertical output line 12. The vertical output line 12 defines a capacitive load $C_{vert}$. A second stage 2 is used for column amplification by means of a second amplifier $A_2$. In a two-dimensional array, a second switch $S_2$ arranged in the second stage 2 is used for column selection (y coordinate). A horizontal output line 22 of the second stage 2 defines a capacitive load $C_{hor}$. A third stage 3 with a third amplifier $A_3$, also shown in Fig. 1, is optional and serves as an output stage with an off-chip buffer.

The requirements for the first stage 1 and second stage 2 differ significantly regarding speed, noise, power consumption, layout size, load characteristics etc. In general the first stage 1 should have minimum noise, very low power consumption, be of minimum size and drive a capacitive load $C_{vert}$ as defined by the vertical output line. Only the speed requirements are moderate as long as the slew rate necessary to support a line change without delay can be achieved. The specifications of the second stage 2 differ significantly from those of the first stage 1, i.e., noise, size and power requirements are relaxed but speed must be maximum possible. Also the capacitive load $C_{hor}$ of the second stage 2 tends to be higher, depending on the particular sensor dimensions.

The maximum row frequency, defined by the first stage 1, is limited by its slew rate. If, in a two-dimensional sensor as partially shown in **Figure 2**, the pixel readout has to be interrupted between rows for the first-stage output to settle, the overall frame rate will be reduced. Such a delay after a new row is selected is common in many of today's APS.

For the second stage 2 of an APS (turning again to Fig. 1) it is also the slew rate $S_R$ that limits the maximum output frequency. Especially for high-resolution sensors with a high pixel count in the x dimension the capacitance $C_{hor}$ cannot be made very small, e.g., in a 0.5 μm CMOS APS with a physical size in the x dimension of 16 mm this capacitance is approximately 10 pF. If an output frequency of 40 Mpixel/sec is to be supported, the slew rate has to be approximately 4 V/μsec, which also defines the output current I for the second amplifier $A_2$:

$$SR = I/C_{hor} \; .$$

This by itself is not an unrealistic design specification, but the constraint of a pixel-pitch adapted layout, a power-saving addressing mode and a good overall amplification characteristic of the second amplifier $A_2$ may easily impose unachievable design parameters.

## Summary of the invention

It is an object of the invention to provide an APS with reduced slew-rate requirements of its first and/ or second stage, and to indicate a method for detecting electromagnetic radiation using the APS sensor. This is achieved by the device and the method as defined in the independent claims.

The sensor and the method according to the invention are based on a time-interleaved readout scheme that allows pre-charging of time critical signals.

The optoelectronic sensor according to the invention comprises at least two pixels (picture elements), each pixel comprising a photodetector for generating an electric output signal as a function of incident electromagnetic radiation, each pixel further comprising an output line for said output signal, and each pixel being individually addressable with a pixel address. The sensor further comprises means for addressing individual pixels and means for reading out output signals of individual pixels. Said addressing means are designed such that pixel output lines of a first set of pixels are charged while simultaneously pixel output lines of a second, different set of pixels are read out.

The sensor according to the invention is preferably manufactured in CMOS technology; other technologies such as another MOS type or GaAs are also possible.

The method for detecting electromagnetic radiation according to the invention comprises the steps of addressing individual pixels with pixel addresses, generating in said pixels electric photocharges as a function of incident electromagnetic radiation, and reading out said photocharges. A first set of pixels is addressed while simultaneously a second, different set of pixels is read out.

## Brief description of the drawings

Some embodiments of the invention and, for comparison, the state of the art are described in greater detail hereinafter relative to the attached schematic drawings.

Figure 1    shows a general amplification scheme for an APS with three stages according to the state of the art.

Figure 2    shows an APS address scheme according to the state of the art.

Figure 3    shows a floor plan for an APS with pre-charging for row halves according to the invention.

Figure 4    shows three possible alternatives for split-line implementations in an APS according to the invention.

Figure 5    shows a timing diagram for reducing the slew-rate requirements of the first APS stage according to the invention.

Figure 6    shows a readout-line arrangement for an APS with a chessboard-like distribution of photosensitive areas according to the invention.

Figure 7    shows a horizontal pre-charge architecture for one-and two-dimensional CMOS APS according to the invention.

Figure 8    shows a scheme for horizontal bus line splitting for reducing the load capacity of the second APS stage amplifier according to the invention.

## Description of the preferred embodiments

### A. Pre-charging for two-dimensional imagers in the x dimension

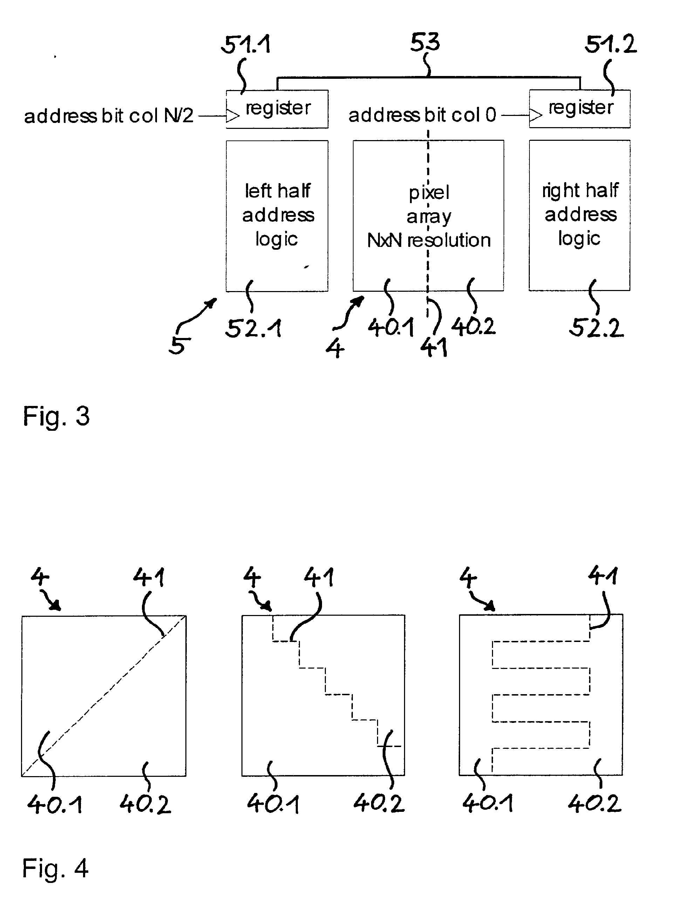

**Figure 3** schematically shows a floor plan for a first embodiment of an APS according to the invention. The APS comprises a two-dimensional array 4 of $N \times N$ pixels, where N is an integer, e.g., N = 1024. As shown in Figure 1, each pixel 1 comprises a photodetector 11 for generating an electric output signal as a function of incident electromagnetic radiation, and each pixel 1 is individually addressable with a pixel address. The APS further comprises means 5 for addressing individual pixels 1, and means for reading out output signals of individual pixels. The addressing means 5 include registers 51.1, 51.2, an address bus 53, and address logic elements 52.1, 52.2.

In this embodiment of the invention, the pixel array 4 is split by a splitting line 41 into two essentially identical halves, left 40.1 and right 40.2. The address logic elements 51.1, 51.2, 52.1, 52.2 are integrated on either sensor side of the pixel array, such that pixels on the right half of a row can be addressed independently of those on the left half.

With this implementation the first APS stages 1 of the left half of a sensor row, representing a first set of pixels, can be selected a half-a-row cycle before the corresponding pixels are read out. Thus the capacitances $C_{vert}$ (cf. Fig. 1) are pre-charged. During this precharging the right half of the previous row, representing a second set of pixels, is read out.

If $t_r$ is the time required to read out one row and $N_x$ is the total number of pixels per row, the first stage 1 has the following pre-charge time $t_s$ to settle:

$$t_s = 1/2 \; t_r \; N_x$$

Obviously the gain achievable with this architecture is related to the sensor resolution, i.e., the precharge time $t_s$ increases linearly with the number $N_x$ of pixels per row. This equation holds true only if a row is read out completely. One advantage of an APS is, however, the definition of regions of interest (ROI), which may also mean to read out only part of a row. A disadvantage of the pre-charging technique as described with reference to the embodiment of Fig. 3 is that it can only be applied if the ROI is symmetric around the splitting line 41. Also in that case the pre-charge time is reduced to

$$t_s = 1/2 \, t_r \, N'_x$$

where $N'_x$ is the horizontal resolution of the defined ROI.

According to the embodiment of Fig. 3, a splitting line 41 divides the pixel array or sensor area 4 into two halves 40.1, 40.2 of the same size. However, depending on the application, a different configuration might be preferable to optimize overall speed performance. Also the sensor split does not need to be the same for every sensor row, i.e., the splitting line 41 can be tilted and does not have to be straight. Such an implementation is beneficial especially for sensors 4 where regions of interest have to be defined that are not symmetric around the sensor middle. In **Figure 4** some examples of a modified sensor splitting are illustrated. For all of these implementations the same fundamental address logic can be used, even if the correct timing has to be adapted to the individual implementation. Integrating additional switches in the row address lines will also allow make the splitting lines 41 programmable. In that way the sensor can be optimized by software for the particular application, and no separate integration is required.

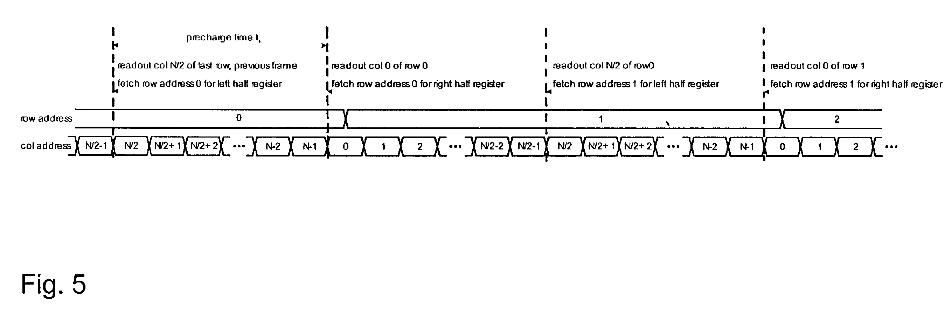

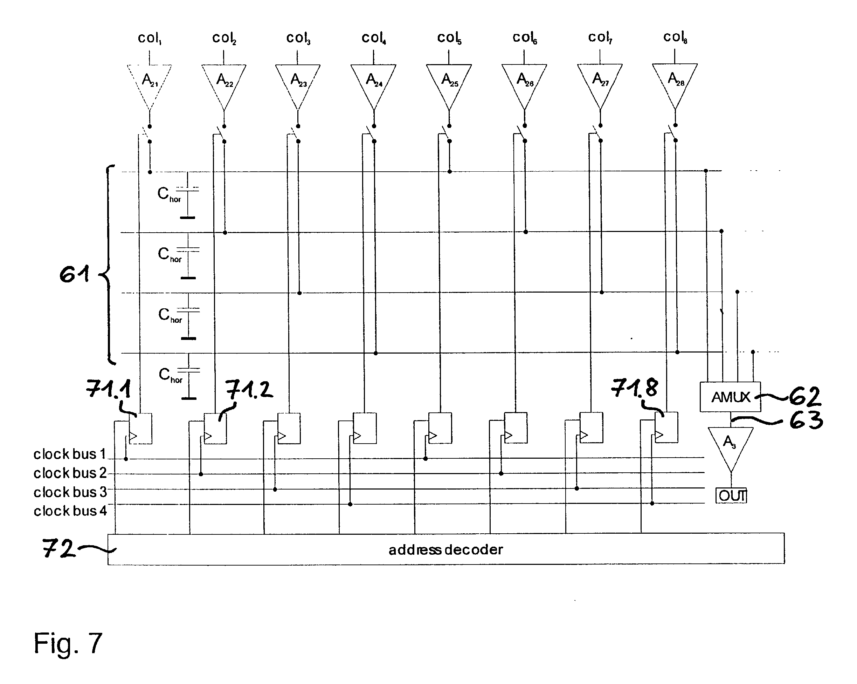

The timing diagram for the embodiment of Fig. 3 is given in **Figure 5**. In this diagram the column addresses col 0 and col N/2 trigger the data fetch for the row addresses. These two column signals indicate only the time when the data need to be fetched. Preferably, a more complex control logic is implemented on chip to guarantee the correct timing and drive strengths of these signals.

The pixel array or sensor area 4 can be split into more than two regions 40.1, 40.2. For two or more regions, the split can be either static, i.e., invariable in time, or dynamic.

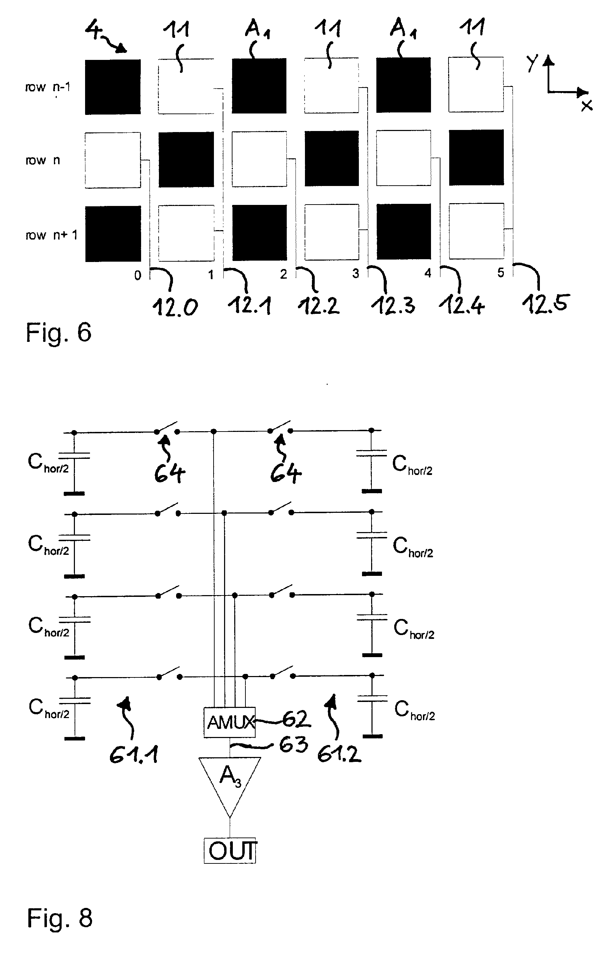

**Figure 6** shows a readout line arrangement for a pixel array 4 with chessboard-like distribution of photosensitive areas 11. The white squares represent the photodiodes 11, the black squares the corresponding first (in-pixel) amplifiers $A_1$.

Rows with even numbers output the signal on even-numbered vertical output lines 12.0, 12.2, ... Accordingly odd-numbered rows output on odd-numbered output lines 12.1, 12.3, ... In this case entire rows are precharged rather than row halves. The principle of precharging could therefore be maintained for any ROI and, the settling time $t_s$ is

$$t_s = t_r \, N_x \, ,$$

where $N_x$ is the number of pixels per row of a ROI.

With decreasing minimum feature sizes of CMOS technologies this principle of row wise pre-charging is also attractive for conventional pixel alignment because input lines are becoming thinner and will no longer affect fill-factor considerations.

**B. Pre-charging for linear sensor arrays and the y dimension in imagers**

**Figure 7** shows a horizontal pre-charge architecture for one-and two-dimensional CMOS photo sensor arrays according to the invention. In this embodiment the slew-rate requirements of the second APS stage 2 are reduced. For this purpose an analog bus 61 with a width M (where M is an integer) is introduced behind the second amplifiers $A_{21}$, $A_{22}$, ..., $A_{28}$, e.g., M = 4 in Figure 7. Compared to the slew rate $S_R$ defined above, the slew rate $S_R'$ for the described readout architecture with analog bus is:

$$S_R' = S_R/M \, .$$

As shown in Fig. 7, an analog multiplexer 62 switches the four separate bus signals together onto one single output channel 63. The $C_{3in}$ capacitance can be designed very small, e.g., smaller than 10 fF, so that the full slew rate $S_R$ can be achieved at the input of the third amplifier $A_3$. Because only a minimum number of third (off-chip) amplifiers $A_3$ is necessary, i.e., one per sensor output channel 63, very relaxed size and power consumption restrictions can be applied. With this readout scheme the maximum pixel rate only has to be supported at the last stage $A_3$.

The address circuitry to appropriately operate the second switches $S_{21}$, $S_{22}$, ..., $S_{28}$ is also shown in Figure 7. There is one storage element 71.1, 71.2, ..., 71.8 provided for each pixel that can be programmed by an address decoder 72. Through M clock signals the address bits are clocked consecutively into the corresponding D-Flip-Flops. Each switch $S_{21}$, $S_{22}$, ..., $S_{28}$ is closed for M pixel clock cycles, of which M-1 are used to pre-charge the capacitance $C_{hor}$. During the last cycle after the output value settled, the pixel is read out through the analog multiplexer 62 and buffered off chip by $A_3$. The described address logic is just a representative example and alternatives can be used without modifying the basic idea of pre-charging.

**C. Horizontal readout line splitting**

While the method of pre-charging described in Section B. reduces the slew-rate requirements for the second amplifier $A_2$, it is also possible to improve overall performance by reducing the load capacitance $C_{hor}$. Therefore the horizontal bus 61 (cf. Fig. 7) is split into two halves 61.1, 61.2 which will also half the load ca-

pacitance $C_{hor}$ to

$$C_{hor}' = 0.5\ C_{hor}\ .$$

The gain of this embodiment can equally be applied towards a speed enhancement or a reduction in power consumption.

This embodiment of an APS according to the invention is shown in **Figure 8**. (Figure 7 essentially corresponds to the lefthand side of Figure 8.) Central bus switches 64 can be addressed with the most significant bit (MSB) of the horizontal address decoder 72. Just like in the embodiments discussed above, the signals are then multiplexed onto the output buffer $A_3$ or output buffers in case there are several output channels 63.

Besides the improved speed performance, the central location of the third buffer stage 3 improves the sensor uniformity. This can be understood when taking into consideration that the second APS stage 2 very often suffers from a gradient in offset, gain and/or speed across the horizontal sensor dimension. The central separation into two identical halves 61.1, 61.2 reduces the amplitude of any such gradient, thus increasing overall uniformity. This improvement may be better than by a factor 2 depending on the shape of the default gradient in the device without readout-line splitting.

**Claims**

1. An optoelectronic sensor comprising

   at least two pixels (1),

      each pixel (1) comprising a photodetector (11) for generating an electric output signal as a function of incident electromagnetic radiation,
      each pixel (1) further comprising an output line (12) for said output signal, and
      each pixel (1) being individually addressable with a pixel address,

   means (5) for addressing individual pixels (1), and
   means (61-63) for reading out output signals of individual pixels (1),

   **characterized in that**
   said addressing means (5) are designed such that pixel output lines (12) of a first set of pixels are charged while simultaneously pixel output lines (12) of a second, different set of pixels are read out.

2. The sensor according to claim 1, wherein said pixels (1) are arranged in rows and columns of a two-dimensional array (4), and wherein said addressing means (5) are designed such that they define a splitting line (41) extending through all rows and splitting said array (4) into two regions (40.1, 40.2), the rows of a first region (40.1) being said first sets of pixels and the rows of a second region (40.2) being said second sets of pixels.

3. The sensor according to claim 2, wherein said addressing means (5) are designed such that said splitting line (41) divides said array (4) into two halves (40.1, 40.2) of the same size.

4. The sensor according to claim 2, wherein said addressing means (5) are designed such that said first set of pixels and said second set of pixels have different numbers of pixels.

5. The sensor according to any of the previous claims, wherein said pixels (1) are arranged in rows and columns of a two-dimensional array (4) and said addressing means (5) are designed such that said first set of pixels and said second set of pixels are located in different rows.

6. The sensor according to claim 5, wherein said photodetectors (11) are arranged in a chessboard-like distribution.

7. The sensor according to any of the previous claims, wherein said addressing means (5) are designed such that at least one pixel address within said first and/or second set of pixels varies in time.

8. The sensor according to any of the previous claims, wherein said readout means comprise analog means (62) for multiplexing pixel output signals.

9. A method for detecting electromagnetic radiation using the optoelectronic sensor according to any of the claims 1-8, comprising the steps of

   addressing individual pixels (1) with pixel addresses, generating in said pixels (1) electric output signals as a function of incident electromagnetic radiation, and
   reading out said output signals,

   **characterized in that**
   a first set of pixels is addressed while simultaneously a second, different set of pixels is read out.

10. The method according to claim 9, wherein said pixels (11) are arranged in rows and columns of a two-dimensional array (4), and wherein said array is split into two regions (40.1, 40.2) by a splitting line (41) extending through all rows, the rows of a first region (40.1) being said first sets of pixels and the rows of a second region (40.2) being said second sets of pixels.

**11.** The method according to claim 9 or 10, wherein said pixels (11) are arranged in rows and columns of a two-dimensional array (4) and said first set of pixels and said second set of pixels are chosen to be located in different rows.

**12.** The method according to claim 11, wherein said photodetectors (11) are chosen to be arranged in a chessboard-like distribution.

**13.** The method according to any of claims 9-12, wherein at least one column address within said first and/or second set of pixels varies in time.

Fig. 1

Fig. 2      PRIOR ART

51.1　　　　　　　　　53　　　　　　　　　51.2

address bit col N/2 ⟶ ▷| register | address bit col 0 ⟶ ▷| register |

| left half address logic | pixel array NxN resolution | right half address logic |

5　　　52.1　　　　4　　40.1　　40.2　　41　　52.2

# Fig. 3

4　　41　　　　　4　　41　　　　　4　　41

40.1　　40.2　　　40.1　　40.2　　　40.1　　40.2

# Fig. 4

precharge time $t_s$

readout col N/2 of last row, previous frame

fetch row address 0 for left half register

readout col 0 of row 0

fetch row address 0 for right half register

readout col N/2 of row0

fetch row address 1 for left half register

readout col 0 of row 1

fetch row address 1 for right half register

row address 0 1 2

col address N/2-1 N/2 N/2+1 N/2+2 ... N-2 N-1 0 1 2 ... N/2-2 N/2-1 N/2 N/2+1 N/2+2 ... N-2 N-1 0 1 2 ...

Fig. 5

Fig. 7

Fig. 6

Fig. 8

**European Patent Office**

**EUROPEAN SEARCH REPORT**

Application Number

EP 01 81 0576

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 332 586 A (SIMAGE OY) 23 June 1999 (1999-06-23) * page 10, line 1 - line 15 * * page 13, line 1 - line 2; figure 3B * | 1,9 | H04N3/15 |
| X | EP 0 865 197 A (MATSUSHITA ELECTRONICS CORP) 16 September 1998 (1998-09-16) * column 15, line 10 - line 46; figure 9 * | 1,9 | |

TECHNICAL FIELDS SEARCHED (Int.Cl.7)

H04N

The present search report has been drawn up for all claims

| Place of search | Date of completion of the search | Examiner |
|---|---|---|
| THE HAGUE | 30 November 2001 | Bequet, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 267 567 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2001

| Patent document cited in search report | Publication date | Patent family member(s) | Publication date |
|---|---|---|---|
| GB 2332586 A | 23-06-1999 | GB 2332800 A | 30-06-1999 |
| | | AT 202882 T | 15-07-2001 |
| | | AU 1874699 A | 12-07-1999 |
| | | AU 2153999 A | 12-07-1999 |
| | | AU 2154099 A | 12-07-1999 |
| | | DE 69801059 D1 | 09-08-2001 |
| | | DE 69801059 T2 | 18-10-2001 |
| | | WO 9933258 A1 | 01-07-1999 |
| | | WO 9933259 A1 | 01-07-1999 |
| | | WO 9933260 A1 | 01-07-1999 |
| | | EP 1040648 A1 | 04-10-2000 |
| | | EP 1040649 A1 | 04-10-2000 |
| | | EP 1040650 A1 | 04-10-2000 |
| | | GB 2332585 A ,B | 23-06-1999 |
| | | US 6255638 B1 | 03-07-2001 |
| | | US 6252217 B1 | 26-06-2001 |
| EP 0865197 A | 16-09-1998 | JP 10257392 A | 25-09-1998 |
| | | EP 0865197 A2 | 16-09-1998 |
| | | TW 395126 B | 21-06-2000 |